Europäisches Patentamt

European Patent Office

Office européen des brevets

(19)

(11) **EP 0 844 298 B1**

(12) **EUROPEAN PATENT SPECIFICATION**

(45) Date of publication and mention
of the grant of the patent:
**15.05.2002   Bulletin 2002/20**

(51) Int Cl.[7]: **C10J 3/66**, C10J 3/16,
C03C 1/02, F23G 5/027,
F23G 7/12, C03C 25/00

(21) Application number: **98101573.8**

(22) Date of filing: **18.10.1994**

(54) **Process for the gasification of glass fiber reinforced plastics**

Verfahren zur Vergasung von glasfaserverstärkten Kunststoffen

Procédé de gazéification de matières plastiques renforcées de fibres de verre

(84) Designated Contracting States:
**DE FR**

(30) Priority: **19.10.1993  JP  26087393**
**19.10.1993  JP  26087293**

(43) Date of publication of application:
**27.05.1998   Bulletin 1998/22**

(62) Document number(s) of the earlier application(s) in
accordance with Art. 76 EPC:
**94116402.2 / 0 648 829**

(73) Proprietor: **MITSUBISHI JUKOGYO KABUSHIKI
KAISHA**
**Tokyo (JP)**

(72) Inventors:
• **Takeuchi, Yoshiyuki Mitsubishi Jukogyo K.K.**
**Nishi-ku, Hiroshima-shi, Hiroshima-ken (JP)**
• **Tamura, Tadaaki Mitsubishi Jukogyo K.K.**
**Nishi-ku, Hiroshima-shi, Hiroshima-ken (JP)**

• **Sakai, Masayasu Mitsubishi Jukogyo K.K.**
**Nishi-ku, Hiroshima-shi, Hiroshima-ken (JP)**
• **Harada, Takayuki, Mitsubishi Jukogyo K.K.**
**Shimonoseki-shi, Yamaguchi-ken (JP)**
• **Fujiwara, Kunihisa Mitsubishi Jukogyo K.K.**
**Nishi-ku, Hiroshima-shi, Hiroshima-ken (JP)**
• **Hashimoto, Ritsuo Mitsubishi Jukogyo K.K.**
**Nishi-ku, Hiroshima-shi, Hiroshima-ken (JP)**
• **Horizoe, Hirotoshi Mitsubishi Jukogyo K.K.**
**Nishi-ku, Hiroshima-shi, Hiroshima-ken (JP)**

(74) Representative: **Behrens, Dieter, Dr.-Ing.**
**Wuesthoff & Wuesthoff**
**Patent- und Rechtsanwälte**
**Schweigerstrasse 2**
**81541 München (DE)**

(56) References cited:
**WO-A-94/03406**            **US-A- 3 847 664**
**US-A- 4 145 202**          **US-A- 4 397 692**
**US-A- 4 462 815**          **US-A- 5 019 171**

EP 0 844 298 B1

**Description**

The invention relates to a process for burning or gasifying an organic material through partial oxidation and thereby producing an effectively utilizable gas.

The invention relates to a process for effectively utilizing glass fiber reinforced plastic (GFRP) waste by the gasification thereof. More particularly, it relates to a process for gasifying GFRP waste to recover the heat so generated.

Conventionally, organic materials including wood, farm products (such as sugarcane and corn), common plants (such as algae and weeds) and the like have been gasified. Moreover, techniques for the gasification of waste products consisting largely of organic materials have recently been developed for the purpose of processing industrial waste including plastics, waster paper, so-called shredder dust obtained by crushing plastics in scrapped automobiles, scrapped FRP boats composed mainly of thermoset resin, and the like.

Generally, conventional processes for the gasification of such organic materials have been carried out in a single-stage pyrolysis or combustion furnace of the moving bed or fluidized bed type using air or oxygen, for the main purpose of recovering waste heat. Recently, processes for thermally decomposing plastics-containing waste in a single-stage pyrolysis furnace to recover its oil content are also being developed.

US-A-3,847,664 describes a process for removing organic binder material from glass fibers, wherein the organic binder is gasified by contacting it with a gas containing oxygen and aqueous vapour at a temperature below the incipient fusion temperature of the glass.

US-A-5,019,171 describes a process in which GFRP material is fed to a rotary furnace and heated to the temperature range of 454 to 565°C which is above the vaporization point of the organic resin within the GFRP, which is gasified. The structural integrity of the glass fibers is retained by not exceeding 565°C. A purge gas sweeps away volatized gases while the fibers are withdrawn from the furnace. The volatized organic resin and the purge gas is withdrawn from the furnace and is introduced into an afterburner and heated to complete combustion of all hydrocarbons. The heat in the flue gas is recovered in a heat exchanger.

EP-A-0 153 235 relates to a two-step process for gasifying an organic material, wherein in a first step the organic material is contacted with oxygen and aqueous vapour at a temperature of 700 to 800°C, and in a second step the gases produced in the first reactor are converted at a temperature of 1,300 to 1,500°C.

Each of the above-described conventional processes involves the following problems.

(a) Since a plurality of materials are mixed together, the pyrolysis temperature varies widely, thus making the operation difficult. Moreover, the formation of soot due to undecomposed carbon and the deposition of coking products on the walls of the apparatus are problematic.

(b) Especially in the case of plastics, their combustion produces high temperatures exceeding about 1,200°C and hence tends to cause damage to the walls of the combustion furnace.

(c) The plastic component of GFRP tends to undergo coking because the inside of the GFRP is heated to a high temperature as a result of its combustion reaction with oxygen and the rapid oxygen consumption causes a shortage of oxygen, thus making it difficult to gasify the plastic component completely. Consequently, it is impossible to isolate the glass fibers and utilize them effectively.

In view of the above-described technological level of the art, it is an object of the invention as defined in appended claims 1 to 3 to provide a process for gasifying the plastic component of GFRP, withdrawing the remaining glass fibers, and recovering the heat generated by the gasification of the plastic avoiding the above-mentioned shortcomings of the prior art methods.

According to the invention, the GFRP material is processed as follows:

In the first step of the claimed process, the GFRP material is fed to a gasification section where it is heated to a temperature of 650 to 750°C in the presence of air and steam. Thus, only the plastic component of the GFRP material is gasified completely. It is conceivable to use air alone during this gasification, but this may produce high temperatures locally. Consequently, air diluted with steam is used to ensure complete gasification. The gasification conditions in this first step are preferably such that the ratio of air to GFRP is in the range of 0.4 to 2.4 N liters of air per gram of GFRP and the ratio of steam to GFRP is not less than 2.0 grams of steam per gram of GFRP. The gas produced in the first step comprises CO, $CO_2$, $H_2$, $N_2$ $0_2$, methane, ethane, propane, and other hydrocarbon compounds having a boiling point ranging from room temperature to about 750°C. This gas will hereinafter be referred to as the plastic gas. Since the glass fibers have a melting point of about 830°C, they remain intact in the first step and are recovered in solid form.

Then, the plastic gas from which the glass fibers were separated is transferred to a second step where it is burned in the presence of additional air or an additional mixture of air and steam, and the heat so generated is recovered.

The combustion conditions in the second step are preferably such that, when the amount of the plastic gas is expressed in terms of the GFRP material, the ratio of air to GFRP is in the range of 2.3 to 4.3 N liters of air per gram of GFRP depending on the amount of air used in the first step and, when steam is fed together with air, the ratio of steam to GFRP is not less than 3.0 grams of steam per gram of GFRP.

The invention will become more fully understood from the detailed description given hereinbelow and the accompanying drawings which are given by way of illustration only, and thus are not limitative of the present invention and wherein:

Fig. 1    is a flow diagram illustrating the process for the gasification of GFRP in accordance with the nvention; and

Fig. 2    is a schematic view illustrating the apparatus for the gasification of GFRP carrying out the method in accordance with the invention.

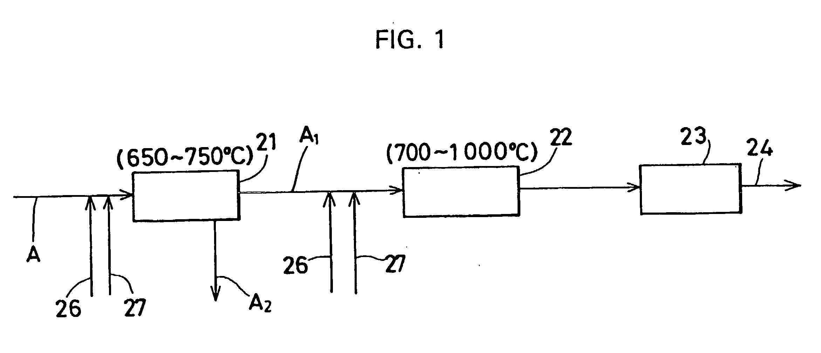

Now, the process in accordance with the invention will be described hereinbelow with reference to Fig. 1 which is a flow diagram illustrating the process for the gasification of GFRP in accordance with the invention.

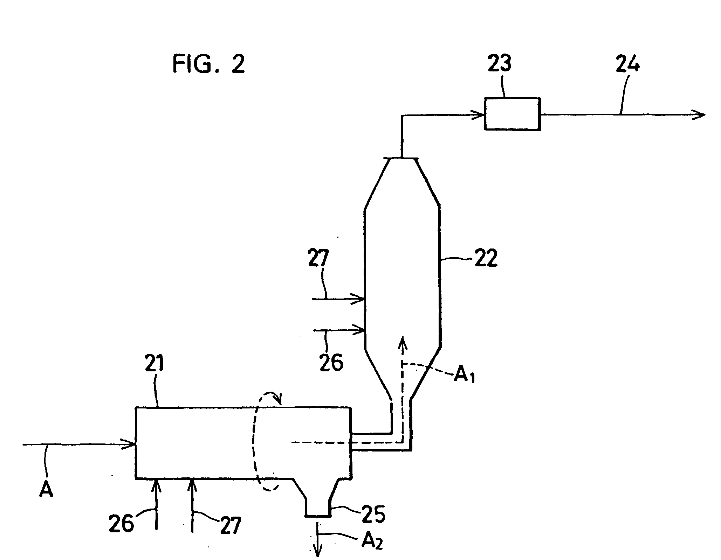

As shown, this process involves a gasification section 21, a combustion section 22 connected to gasification section 21, and a heat recovery section 23 connected to combustion section 22. In gasification section 21, a first step is carried out in which a GFRP material A that has previously been crushed to pieces is fed and heated in the presence of air 27 and steam 26 to gasify the plastic component of the GFRP and thereby produce a plastic gas $A_1$ and the remaining solid glass fibers $A_2$ are recovered through a discharge orifice 25. In combustion section 22, a second step is carried out in which the plastic gas A, produced in the first step is introduced and burned in the presence of additional air 27 and, if necessary, additional steam 26, and the heat so generated is recovered in heat recovery section 23. In Fig. 2, reference numeral 24 designates a flow path of exhaust gas comprising $CO_2$, $H_2O$, $N_2$ and the like.

Next, the steps of this gasification process are more specifically explained in the following. A GFRP material A that has previously been crushed to pieces is fed to a gasification furnace (gasification section) 21 where it is heated to a temperature of 650 to 750°C in the presence of appropriate amounts of air 27 and steam 26. Thus, the plastic constituting a component of GFRP material A is gasified. The glass fibers $A_2$ (with a melting point of about 830°C) present in GFRP material A remain in gasification furnace 21 and are recovered through the discharge orifice thereof (first step).

On the other hand, the plastic gas $A_1$ produced in the first step is then introduced into a combustion furnace (combustion section) 22 where additional air 27 and, if necessary, an appropriate amount of additional steam 26 are supplied to plastic gas $A_1$. As a result, plastic gas $A_1$ undergoes the following reaction:

$$CH + 3/2\, O_2 \rightarrow CO_2 + 1/2\, H_2O + Q$$

where CH represents the plastic gas. Thus, plastic gas $A_1$ is oxidized (or burned) at a temperature of about 700 to 1,000°C to generate heat Q. This heat Q is recovered in a heat recovery unit 23 (second step).

When GFRP material A is heated in gasification furnace 21 and plastic gas $A_1$ is burned in combustion furnace 22, the presence of an appropriate amount of steam 26 induces heat absorption as a result of the following reaction:

$$CH + H_2O \rightarrow CO + 3/2\, H_2$$

Since this causes the reactions to proceed gently, the local production of high temperatures is suppressed during heating of the GFRP in the presence of oxygen in air or combustion of the plastic gas in the presence of oxygen in air, so that coking phenomena can be prevented.

Now, an apparatus for carrying out the method of the invention will be described hereinbelow with reference to Fig. 2 which is a schematic view illustrating the construction of the apparatus for the gasification of GFRP.

As shown, the apparatus is composed of a gasification furnace (or kiln) 21 consisting of a horizontally disposed rotatable cylindrical structure, a plastic gas combustion furnace 22 connected to gasification furnace 1, and a heat recovery unit 23 connected to combustion furnace 22.

Gasification furnace 21 has a heating zone for receiving a GFRP material A previously crushed to pieces and heating it in the presence of oxygen 27 and steam 26 to gasify the plastic component of the GFRP and thereby produce a plastic gas $A_1$ and a recovery zone for recovering the glass fibers $A_2$ remaining after the gasification of the plastic through a discharge orifice 25. Combustion furnace 22 consists of a cylindrical or box-like structure connected to the above-described gasification furnace 21 and disposed vertically, in which the plastic gas $A_1$ introduced from gasification furnace 1 is burned in the presence of additional air 27 and, if necessary, additional steam 26. Heat recovery unit 23 is a device for recovering the heat generated in combustion furnace 22.

Next, the procedure for gasification using this gasification apparatus is described in greater detail.

First of all, a GFRP material A that has previously been crushed to pieces is fed to a rotating gasification furnace 21. In gasification furnace 21, GFRP material A is heated to a temperature of 650 to 750°C in the presence of air 27 and steam 26 Thus, the plastic constituting a component of the GFRP is gasified to produce a plastic gas $A_1$. The glass fibers (with a melting point of about 830°C) present in the GFRP remain in gasification furnace 21, move forward with the rotation of gasification furnace 21, and are recovered through a discharge orifice 5.

On the other hand, plastic gas $A_1$ is introduced into a combustion furnace 22 where additional air 27 and, if necessary, an appropriate amount of additional steam 26 are supplied to plastic gas $A_1$. As a result, plastic gas $A_1$ undergoes the following reaction:

$$CH + 3/2\ O_2 \rightarrow CO_2 + 1/2\ H_2O + Q$$

Thus, plastic gas $A_1$ is oxidized (or burned) at a temperature of about 700 to 1,000°C to generate heat Q. The resulting combustion gas is introduced into a heat recovery unit (such as heat exchanger) 23 where heat Q is recovered.

As described above, heat absorption takes place as a result of the combined use of oxygen 27 and steam 26 in gasification furnace 21 and combustion furnace 22. Accordingly, by properly regulating the amount of steam 26 and thereby allowing the reactions to proceed gently, the gasification of GFRP can be effected at a proper temperature to recover the glass fibers and the generated heat efficiently.

Now, the effects produced by the invention will be demonstrated by the following Testing Examples 1 and 2.

Testing Example 1

A GFRP for use in boats having the analytical values given below was cut into about 5 mm cubes. This GFRP material A was gasified according to the flow diagram of Fig. 1 and the heat so generated was recovered. Both gasification section 21 and combustion section 22 comprised quartz tubes having an inner diameter of 5 cm, and the overall length of these quartz tubes was fixed at 2 m. The temperature of gasification section 21 could be varied between 600°C and 900°C, and the temperature of combustion section 22 between 700°C and 1,000°C. GFRP material A was fed to gasification section 21 at a constant rate of 0.5 g/min.

(Analytical values of GFRP)

C: 50.4 wt.%
H: 4.4 wt.%
0: 7.5 wt.%
Water: 0.0 wt.%
Ash (including glass fibers): 37.7 wt.%

The operating conditions of gasification section 21 and combustion section 22 were set as shown in Table 1. Quartz wool or a filter was disposed at the inlet of heat recovery unit 23 to collect any soot or tar in the product gas. After a predetermined testing time (about 35 minutes), the glass fibers were removed, examined by visual observation, and analyzed for unburned carbon. The results thus obtained are shown in Table 1.

## Table 1

| Run No. | First step (gasification section) | | | | Second step (combustion section) | | |
| --- | --- | --- | --- | --- | --- | --- | --- |
| | Feed rate of GFRP (g/min) | Temp. (°C) | Air (l/min) | Steam (g/min) | Temp. (°C) | Air (l/min) | Steam (g/min) |
| 1 | 0.5 | 600 | 1.2 | 2.0 | 600 | 2.4 | 0.0 |
| 2 | 0.5 | 650 | 1.2 | 2.0 | 650 | 2.4 | 0.0 |
| 3 | 0.5 | 700 | 1.2 | 2.0 | 700 | 2.4 | 0.0 |
| 4 | 0.5 | 700 | 1.2 | 2.0 | 1,000 | 2.4 | 0.0 |
| 5 | 0.5 | 700 | 1.2 | 2.0 | 1,000 | 2.4 | 0.5 |
| 6 | 0.5 | 700 | 1.2 | 2.0 | 850 | 2.4 | 0.0 |
| 7 | 0.5 | 700 | 1.2 | 2.0 | 850 | 2.4 | 0.5 |
| 8 | 0.5 | 750 | 1.2 | 2.0 | 750 | 2.4 | 0.5 |
| 9 | 0.5 | 800 | 1.2 | 2.0 | 800 | 2.4 | 0.5 |
| 10 | 0.5 | 900 | 1.2 | 2.0 | 900 | 2.4 | 0.5 |
| 11 | 0.5 | 700 | 1.2 | 0.0 | 700 | 2.4 | 0.5 |
| 12 | 0.5 | 700 | 0.0 | 0.0 | 700 | 2.4 | 0.5 |
| 13 | 0.5 | 700 | 0.0 | 2.0 | 700 | 2.4 | 0.5 |

## Table 1 (Continuation)

| Run No. | * Rate of Gasification (wt%) | Coking products or unburned components in glass fibers 0 : Absent X : Present | Tar or soot in product gas 0 : Absent X : Present |
|---|---|---|---|
| 1 | 85 | X | 0 |
| 2 | 98 | 0 | 0 |
| 3 | 99 | 0 | 0 |
| 4 | 99 | 0 | 0 |
| 5 | 100 | 0 | 0 |
| 6 | 99 | 0 | 0 |
| 7 | 100 | 0 | 0 |
| 8 | 100 | 0 | 0 |
| 9 | 86 | X | X |
| 10 | 90 | X | X |
| 11 | 83 | X | X |
| 12 | 60 | X | X |
| 13 | 72 | X | X |

(*) The percentage of the carbon in the GFRP material which was converted into CO and $CO_2$

Testing Example 2

An example of the apparatus for the gasification of GFRP in accordance with the fifth embodiment of the present invention is presented. This apparatus has the same construction as that illustrated in Fig. 2. The specifications of several components of this apparatus, its operating conditions, and the results of operation are given below. The GFRP material used was the same as that described in Testing Example 1.

(Specifications)

Gasification furnace 21: 150 mm (diameter) x 500 mm (length)
Rotational speed of gasification furnace 21: 6 rpm
Combustion furnace 21: 200 mm (diameter) x 1,500 mm (length)

(Operating conditions)

Temperature of gasification furnace 21: 700°
Amount of steam supplied to gasification furnace 21: 3. 6 Nm$^3$/h
Amount of air supplied to gasification furnace 21: 5. 0 Nm$^3$/h
Temperature of plastic gas decomposition furnace 22: 990°C
Amount of air supplied to combustion furnace 22: 5.4 Nm$^3$/h

(Results of operation)

Flow rate of product gas: 15.3 Nm$^3$/h
Composition of product gas (vol%): C0$_2$ = 21.7, N$_2$ = 79.3
Rate of gasification (i.e., the percentage of the carbon in GFRP which was converted into CO$_2$): 100%
Residue: Only white glass fibers containing no unreacted carbon components or coking products (continuously recovered).

Thus, according to the invention, a GFRP material is gasified in a gasification section (or gasification furnace) in the presence of air and an appropriate amount of steam, so that only the plastic component of the GFRP is gasified and the remaining glass fibers can be recovered. Then, the resulting plastic gas is burned in a combustion section (or combustion furnace) under mild conditions, so that heat recovery can be achieved without causing damage to the walls of the furnace owing to high-temperature combustion as was usual with the prior art.

**Claims**

1.    A process for the gasification of glass fiber reinforced plastics (GFRP) which comprises the first step of feeding a glass fiber reinforced plastic material to a gasification section, heating the material to a temperature of 650 to 750°C in the presence of air and steam to gasify the plastic component thereof, and recovering the remaining glass fibers; and the second step of introducing the resulting plastic gas into a combustion section, burning the plastic gas at a temperature of 700 to 1,000°C in the presence of additional air or an additional mixture of air and steam, and recovering the heat so generated.

2.    Process according to claim 1 wherein in the first step the ratio of air to GFRP is in the range of 0.4 to 2.4 N liters of air per grams of GFRP and the ratio of steam to GFRP is not less than 2.0 grams of steam per gram of GFRP.

3.    Process according to claim 1 or 2 wherein in the second step the combustion conditions are such that, when the amount of the plastic gas is expressed in terms of the GFRP material, the ratio of air to GFRP is in the range of 2.3 to 4.3 N liters of air per gram of GFRP, and, when steam is fed together with air, the ratio of steam to GFRP is not less than 3.0 grams of steam per gram of GFRP.

**Patentansprüche**

1.    Verfahren zum Vergasen von glasfaserverstärkten Kunststoffen (GFVK), mit einer ersten Stufe, in der glasfaserverstärktes Kunststoffmaterial einem Vergasungsabschnitt aufgegeben wird, das Material in Gegenwart von Luft und Dampf zum Vergasen des Kunststoffanteils auf eine Temperatur von 650 bis 750 °C erhitzt wird und die verbleibenden Glasfasern wiedergewonnen werden, und einer zweiten Stufe, in der das entstandene Kunststoffgas in einen Verbrennungsabschnitt eingeführt wird, das Kunststoffgas in Gegenwart von zusätzlicher Luft oder eines zusätzlichen Gemischs aus Luft und Dampf bei einer Temperatur von 700 bis 1000 °C verbrannt und die auf diese Weise erzeugte Wärme gewonnen wird.

2.    Verfahren nach Anspruch 1, bei dem in der ersten Stufe das Verhältnis von Luft zu GFVK im Bereich von 0,4 bis 2,4 N Liter je Gramm GFVK liegt und das Verhältnis von Dampf zu GFVK nicht weniger als 2,0 Gramm Dampf je Gramm GFVK beträgt.

3. Verfahren nach Anspruch 1 oder 2, bei dem die Verbrennungsbedingungen in der zweiten Stufe derart eingestellt sind, dass, wenn die Kunststoffgasmenge als GFVK-Menge ausgedrückt ist, das Verhältnis von Luft zu GFVK im Bereich von 2,3 bis 4,3 N Liter Luft je Gramm GFVK liegt, und, wenn Dampf zusammen mit Luft eingeleitet wird, dass Verhältnis von Dampf zu GFVK nicht weniger als 3,0 Gramm Dampf je Gramm GFVK beträgt

**Revendications**

1. Procédé de gazéification de matière synthétique renforcée de fibres de verre (GFRP) qui comprend la première opération consistant à alimenter une matière synthétique renforcée de fibres de verre dans une section de gazéification, chauffer le matériau à une température de 650 à 750 °C en présence d'air et de vapeur pour gazéifier le composant de matière synthétique de celui-ci et récupérer les fibres de verre restantes; et la deuxième opération consistant à introduire le gaz de matière synthétique résultant dans une section de combustion, brûler le gaz de matière synthétique à une température de 700 à 1.000 °C en présence d'air additionnel ou d'un mélange additionnel d'air et vapeur et récupérer la chaleur ainsi produite.

2. Procédé selon la revendication 1 dans lequel dans la première opération le rapport de l'air à la GFRP est dans la plage de 0,4 à 2,4 N litres d'air par gramme de GFRP et le rapport de la vapeur à la GFRP n'est pas inférieur à 2,0 grammes de vapeur par gramme de GFRP.

3. Procédé selon la revendication 1 ou 2 dans lequel dans la deuxième opération les conditions de combustion sont telles que, quand la quantité du gaz de matière synthétique est exprimée en termes de matériau de GFRP, le rapport de l'air à la GFRP est dans la plage de 2,3 à 4,3 N litres d'air par gramme de GFRP, et, quand la vapeur est alimentée ensemble avec de l'air, le rapport de la vapeur à la GFRP n'est pas inférieur à 3,0 grammes de vapeur par gramme de GFRP.

EP 0 844 298 B1

## FIG. 1

FIG. 2

EP 0 844 298 B1